(19) **Europäisches Patentamt European Patent Office Office européen des brevets**

(11) **EP 4 628 469 A1**

(12) **EUROPEAN PATENT APPLICATION**
published in accordance with Art. 153(4) EPC

(43) Date of publication:
**08.10.2025 Bulletin 2025/41**

(21) Application number: **23897842.3**

(22) Date of filing: **29.11.2023**

(51) International Patent Classification (IPC):
**C04B 35/117** (2006.01)

(52) Cooperative Patent Classification (CPC):
**C04B 35/117**

(86) International application number:
**PCT/JP2023/042786**

(87) International publication number:
**WO 2024/117196 (06.06.2024 Gazette 2024/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.11.2022 JP 2022190454**
**29.09.2023 JP 2023170655**

(71) Applicant: **Kyocera Corporation**
**Kyoto-shi, Kyoto 612-8501 (JP)**

(72) Inventors:
- **MATSUSHITA, Kouji**
 **Kyoto-shi, Kyoto 612-8501 (JP)**
- **TANI, Yoshito**
 **Kyoto-shi, Kyoto 612-8501 (JP)**
- **TOMITA, Yuuki**
 **Kyoto-shi, Kyoto 612-8501 (JP)**

(74) Representative: **Viering, Jentschura & Partner mbB**
**Patent- und Rechtsanwälte**
**Am Brauhaus 8**
**01099 Dresden (DE)**

(54) **CERAMIC SINTERED BODY**

(57)     A ceramic sintered body contains 90 mass% or more of Al in terms of $Al_2O_3$, 0.4 mass% or more and 2.5 mass% or less of Si in terms of $SiO_2$, 3.0 mass% or more and 3.7 mass% or less of Mn in terms of $MnO_2$, 1.1 mass% or more and 1.7 mass% or less of Ti in terms of $TiO_2$, 1.1 mass% or more and 1.7 mass% or less of Fe in terms of $Fe_2O_3$, and 0.05 mass% or more and 0.3 mass% or less of Mg in terms of MgO. The ceramic sintered body has a $\Delta E$ value of 0 or more and 36 or less, calculated based on a*, b*, and L*.

EP 4 628 469 A1

**Description**

TECHNICAL FIELD

The present disclosure relates to a ceramic sintered body.

BACKGROUND OF INVENTION

Patent Literature 1 discloses a known ceramic sintered body that is used for a mounting substrate, a member for an exposure treatment device, a light shielding material, a heat absorbing material, and the like. Such a ceramic sintered body has, for example, a black color and includes a composite oxide containing a plurality of metal elements.

CITATION LIST

PATENT LITERATURE

Patent Literature 1: JP H01-42359 A

SUMMARY

A ceramic sintered body according to an aspect of an embodiment contains 90 mass% or more of Al in terms of $Al_2O_3$, 0.4 mass% or more and 2.5 mass% or less of Si in terms of $SiO_2$, 3.0 mass% or more and 3.7 mass% or less of Mn in terms of $MnO_2$, 1.1 mass% or more and 1.7 mass% or less of Ti in terms of $TiO_2$, 1.1 mass% or more and 1.7 mass% or less of Fe in terms of $Fe_2O_3$, and 0.05 mass% or more and 0.3 mass% or less of Mg in terms of MgO. The ceramic sintered body has a ΔE value of 0 or more and 36 or less, calculated based on a*, b*, and L*.

DESCRIPTION OF EMBODIMENTS

The ceramic sintered body described above, for example, has poor bending strength, leaving room for improvement.
Thus, it is expected to provide a black ceramic sintered body having excellent bending strength.
An embodiment of a ceramic sintered body disclosed in the present application will be described in detail below. Note that this invention is not limited to the following embodiment.
The ceramic sintered body of the present disclosure contains Al, Si, Mn, Ti, Fe, and Mg. The ceramic sintered body of the present disclosure contains a plurality of metal oxides.
The ceramic sintered body of the present disclosure exhibits a black color. Specifically, in the ceramic sintered body of the present disclosure, ΔE calculated based on a*, b*, and L* is 36 or less. Here, a*, b*, and L* are values based on the CIE 1976 (L*a*b*) color space in accordance with JIZ Z 8781-4 2013. a*, b*, and L* can be measured using a spectrocolorimeter, for example, CM-700d available from Konica Minolta, Inc., at a wavelength of from 400 nm to 700 nm. The measurement may be performed with a field of view of 10°. A main light source may be D65, and an illumination diameter may be measured under measurement conditions of an aperture of φ6 mm (SAV), SCE (Specular Component Exclude), and measuring after white calibration. Reflectance may be measured, for example, using CM-2600d available from Konica Minolta, Inc., under conditions of SCE (Specular Component Exclude) and a wavelength of from 360 nm to 740 nm. a*, b*, and L* can also be adjusted by firing temperature and firing time in addition to composition of the metal oxides contained in the ceramic sintered body of the present disclosure. ΔE is a value calculated based on a calculation formula of $\Delta E = (a^{*2} + b^{*2} + L^{*2})^{0.5}$. When ΔE has a value of 0, a*, b*, and L* all have values of 0, indicating a black color. Conversely, an increase in the value of ΔE indicates that the color shifts away from black. When ΔE is 36 or less, in other words, it can be said that the color is sufficiently close to black.
The ceramic sintered body of the present disclosure contains 90 mass% or more of Al in terms of $Al_2O_3$. The ceramic sintered body of the present disclosure may contain 90 mass% or more and 95 mass% or less of Al. The content of Al may be adjusted according to contents of other components to be described later.
The ceramic sintered body of the present disclosure contains 0.4 mass% or more and 2.5 mass% or less of Si in terms of $SiO_2$. As a result, it becomes easier to achieve a sufficient density suitable for an application, and becomes easier to obtain a ceramic sintered body having excellent bending strength. The ceramic sintered body of the present disclosure may contain 0.9 mass% or more and 2.0 mass% or less of Si in terms of $SiO_2$. With such composition, a ceramic sintered body with particularly high strength is easily obtained.
The ceramic sintered body of the present disclosure contains 3.0 mass% or more and 3.7 mass% or less of Mn in terms of $MnO_2$. This makes it easier to obtain a ceramic sintered body having ΔE of 36 or less. In addition, it is easier to obtain an insulating ceramic sintered body in which a* and b* are -2.0 or more and 2.0 or less and L* is 0 or more and 36 or less, and which has excellent bending strength, and further has high volume resistivity.

The ceramic sintered body of the present disclosure contains 1.1 mass% or more and 1.7 mass% or less of Ti in terms of $TiO_2$. This makes it easier to obtain a ceramic sintered body having $\Delta E$ of 36 or less. In addition, it is easier to obtain a ceramic sintered body in which a* and b* are -2.0 or more and 2.0 or less and L* is 0 or more and 36 or less, and which has excellent bending strength.

The ceramic sintered body of the present disclosure contains 1.1 mass% or more and 1.7 mass% or less of Mn in terms of $Fe_2O_3$. This makes it easier to obtain a ceramic sintered body having $\Delta E$ of 36 or less. In addition, it is easy to obtain an insulating ceramic sintered body in which a* and b* are -2.0 or more and 2.0 or less and L* is 0 or more and 36 or less, and which has excellent bending strength, and further has high volume resistivity.

The ceramic sintered body of the present disclosure contains 0.05 mass% or more and 0.3 mass% or less of Mg in terms of MgO. As a result, the ceramic sintered body of the present disclosure is less prone to grain growth and is more likely to have excellent bending strength.

In the ceramic sintered body of the present disclosure, the content of Mn in terms of $MnO_2$ may be 2 or more times and 5 or less times the content of Fe in terms of $Fe_2O_3$. As a result, a* and b* are likely to be close to 0, it is more likely to obtain an insulating ceramic sintered body having excellent bending strength and high volume resistivity. Since Mn is dispersed at a grain boundary of an alumina base material, visible light in a low wavelength range to a middle wavelength range is easily absorbed, so that reflection of visible light in a long wavelength range is relatively increased. Thus, the ceramic sintered body of the present disclosure easily reflects infrared light, for example. In particular, when the content of Mn in terms of $MnO_2$ is 2.5 or more times the content of Fe in terms of $Fe_2O_3$, the above effect is remarkable.

The ceramic sintered body of the present disclosure may have a volume resistivity of $10^9$ $\Omega \cdot m$ or more and a three-point bending strength of 310 MPa or more. This results in a ceramic sintered body suitable for an application requiring relatively high insulation resistance and physical strength.

In the ceramic sintered body of the present disclosure, a* and b* may be -1.5 or more and 1.5 or less. This results in a ceramic sintered body suitable for an application requiring a black color in particular.

In the ceramic sintered body of the present disclosure, a sum of the content of Mn in terms of $MnO_2$ and the content of Fe in terms of $Fe_2O_3$ may be 4.5 mass% or more and 6.9 mass%. As a result, a* and b* are likely to be close to 0, it is more likely to obtain an insulating ceramic sintered body having excellent bending strength, and high volume resistivity.

Each metal element contained in the ceramic sintered body of the present disclosure can be quantified using an X-ray fluorescence analyzer (XRF). The content of each metal element obtained by the measurement is converted into a value in terms of a corresponding metal oxide, and is defined as a proportion of each metal element. Specifically, for example, the content of Al is converted in terms of $Al_2O_3$, the content of Si is converted in terms of $SiO_2$, the content of Mn is converted in terms of $MnO_2$, the content of Ti is converted in terms of $TiO_2$, the content of Fe is converted in terms of $Fe_2O_3$, and the content of Mg is converted in terms of MgO. When the ceramic sintered body contains a metal element besides these metal elements, its content may be converted in terms of a representative metal oxide of the element.

The ceramic sintered body of the present disclosure may not contain Co and Cr. In such a case, the ceramic sintered body of the present disclosure can be provided at low cost because expensive Co and Cr are not used. The phrase "may not contain Co and Cr" means that contents of Co and Cr are equal to or less than a detection limit of the X-ray fluorescence analyzer (XRF).

An example of a method for manufacturing the ceramic sintered body of the present disclosure is described.

$Al_2O_3$, $Fe_2O_3$, and $MnO_2$ in particle or powder form are mixed, and $TiO_2$, $SiO_2$, and MgO are added as sintering aids. Each raw material powder may have a particle diameter, for example, of from 0.1 $\mu$m to 5 $\mu$m. Water and a binder are added, mixed and stirred to produce slurry. A molded body having a desired shape is prepared using the resultant slurry, and fired in an oxidizing atmosphere, whereby the ceramic sintered body of the present disclosure is obtained. A known method such as press molding can be used for preparing the molded body.

The firing temperature during firing may be, for example, 1350°C or higher and 1550°C or lower. The firing time may be, for example, about 2 hours. The firing atmosphere may be the atmosphere.

Applications of the ceramic sintered body of the present disclosure will be described. For example, the ceramic sintered body of the present disclosure exhibits a black color, and thus can be used as a member for an exposure treatment device, a light shielding material, a heat absorbing material, and the like. The ceramic sintered body of the present disclosure has an excellent mechanical characteristic and an excellent electrical characteristic, and thus can also be used as a mounting substrate, or a structural component or a functional component of industrial machinery and equipment. The ceramic sintered body of the present disclosure exhibits a black color and has an excellent mechanical characteristic, and thus may be used as a sliding member or a decorative member of a thread path component, fishing gear, and the like.

EXAMPLES

Ceramic sintered bodies having different compositions were prepared, and mechanical strength (three-point bending strength), volume resistivity, a\*, b\*, and L\* were measured. Then, ΔE was determined based on the obtained a\*, b\*, and L\*. ΔE was calculated based on a following relational expression (Formula 1). When not specifically described, a\*, b\*, and L\* were measured on a fired surface of the sintered body.

$$\text{(Formula 1)} \ \Delta E = (a^{*2} + b^{*2} + L^{*2})^{0.5}$$

First, $Al_2O_3$ powder, $SiO_2$ powder, $MnO_2$ powder, $TiO_2$ powder, $Fe_2O_3$ powder, and MgO powder were provided.

Then, the sintered ceramics were weighed so that a mass proportion of Al in terms of Al oxide ($Al_2O_3$), a mass proportion of Si in terms of Si oxide ($SiO_2$), a mass proportion of Mn in terms of Mn oxide ($MnO_2$), a mass proportion of Ti in terms of Ti oxide ($TiO_2$), a mass proportion Fe in terms of Fe oxide ($Fe_2O_3$), and a mass proportion of Mg in terms of Mg oxide (MgO) were values in Table 1.

The weighed powders were mixed and molded to obtain a molded body having a desired shape.

The molded body was fired using a firing furnace in the atmosphere (an oxidizing atmosphere) to obtain sintered body samples.

Each sample was then measured using XRD to confirm the presence of aluminum oxide (alumina). For each sample, after mirror polishing, Al, Si, Mn, Ti, Fe and Mg were measured using XRF to determine a content of each element, and the determined content of the element was converted into a content of each oxide to calculate the proportion of each element shown in Table 1.

Using the obtained sintered body, the three-point bending strength was measured in accordance with JIS R 1601-2008, and the results were shown in Table 1.

Using the obtained sintered body, a\*, b\* and L\* based on the CIE 1976 (L\*a\*b\*) color space were measured in accordance with JIS Z 8722-2000, and ΔE was calculated using the above-described (Formula 1). The results are listed in Table 1.

[Table 1]

(Table 1)

| Sample No. | Al ($Al_2O_3$ conversion) (mass%) | Si ($SiO_2$ conversion) (mass%) | Mg (MgO conversion) (mass%) | Ti ($TiO_2$ conversion) (mass%) | Mn ($MnO_2$ conversion) (mass%) | Fe ($Fe_2O_3$ conversion) (mass%) | $MnO_2/Fe_2O_3$ | Three-point bending strength (MPa) | Volume resistivity ($\times 10^9$ $\Omega \cdot m$) | a* | b* | L* | ΔE |
|---|---|---|---|---|---|---|---|---|---|---|---|---|---|
| 1 | 93.7 | 0.3 | 0.1 | 1.4 | 3.1 | 1.4 | 2.2 | 280 | 1 | 1.0 | 0.5 | 34 | 34 |
| 2 | 93.6 | 0.4 | 0.1 | 1.4 | 3.1 | 1.4 | 2.2 | 320 | 1 | 1.0 | 0.5 | 34 | 34 |
| 3 | 91.5 | 2.5 | 0.1 | 1.4 | 3.1 | 1.4 | 2.2 | 350 | 1 | 1.0 | 0.5 | 34 | 34 |
| 4 | 91 | 3 | 0.1 | 1.4 | 3.1 | 1.4 | 2.2 | 250 | 1 | 1.0 | 0.5 | 34 | 34 |
| 5 | 93 | 1.1 | 0 | 1.4 | 3.1 | 1.4 | 2.2 | 250 | 1 | 1.0 | 0.5 | 34 | 34 |
| 6 | 92.95 | 1.1 | 0.05 | 1.4 | 3.1 | 1.4 | 2.2 | 310 | 1 | 1.0 | 0.5 | 34 | 34 |
| 7 | 92.7 | 1.1 | 0.3 | 1.4 | 3.1 | 1.4 | 2.2 | 340 | 1 | 1.0 | 0.5 | 34 | 34 |
| 8 | 92.6 | 1.1 | 0.4 | 1.4 | 3.1 | 1.4 | 2.2 | 270 | 1 | 1.0 | 0.5 | 34 | 34 |
| 9 | 93.4 | 1 | 0.1 | 1 | 3.1 | 1.4 | 2.2 | 330 | 1 | 2.2 | 2.1 | 37 | 37 |
| 10 | 93.3 | 1 | 0.1 | 1.1 | 3.1 | 1.4 | 2.2 | 330 | 1 | 1.3 | 0.8 | 35 | 35 |
| 11 | 92.7 | 1 | 0.1 | 1.7 | 3.1 | 1.4 | 2.2 | 320 | 1 | 0.9 | 0.5 | 34 | 34 |
| 12 | 92.6 | 1 | 0.1 | 1.8 | 3.1 | 1.4 | 2.2 | 290 | 1 | 0.9 | 0.5 | 34 | 34 |
| 13 | 93.6 | 1 | 0.1 | 1.4 | 2.5 | 1.4 | 1.8 | 340 | 3 | 2.0 | 2.5 | 34 | 34 |
| 14 | 93.1 | 1 | 0.1 | 1.4 | 3 | 1.4 | 2.0 | 330 | 3 | 1.2 | 0.8 | 34 | 34 |
| 15 | 93 | 1 | 0.1 | 1.4 | 3.1 | 1.4 | 2.2 | 320 | 3 | 1.0 | 0.5 | 34 | 34 |
| 16 | 92.4 | 1 | 0.1 | 1.4 | 3.7 | 1.4 | 2.6 | 310 | 2 | 1.2 | 0.4 | 34 | 34 |
| 17 | 92.3 | 1 | 0.1 | 1.4 | 3.8 | 1.4 | 2.7 | 295 | 1.5 | 1.3 | 0.4 | 34 | 34 |
| 18 | 93.4 | 1 | 0.1 | 1.4 | 3.1 | 1 | 3.1 | 340 | 2.6 | 1.1 | 0.4 | 37 | 37 |
| 19 | 93.3 | 1 | 0.1 | 1.4 | 3.1 | 1.1 | 2.8 | 330 | 2.5 | 1.0 | 0.5 | 34 | 34 |
| 20 | 92.7 | 1 | 0.1 | 1.4 | 3.1 | 1.7 | 1.8 | 325 | 2.5 | 1.4 | 1.4 | 34 | 34 |
| 21 | 92.6 | 1 | 0.1 | 1.4 | 3.1 | 1.8 | 1.7 | 320 | 2.6 | 2.1 | 2.6 | 34 | 34 |

As shown in sample Nos. 1 and 4, when Si was contained in an amount of less than 0.4 mass% or more than 2.5 mass% in terms of $SiO_2$, the three-point bending strength was less than 310 MPa, and a ceramic sintered body having poor bending strength was obtained.

As shown in sample Nos. 5 and 8, when Mg was contained in an amount of less than 0.05 mass% or more than 0.3 mass% in terms of MgO, the three-point bending strength was less than 310 MPa, and a ceramic sintered body having poor bending strength was obtained.

As shown in sample No. 9, when Ti was contained in an amount of less than 1.1 mass% in terms of $TiO_2$, $\Delta E$ was more than 36. A ceramic sintered body in which a* and b* were more than 2.0 and L* was more than 36 was obtained. As shown in sample No. 12, when Ti was contained in an amount of more than 1.7 mass% in terms of $TiO_2$, the three-point bending strength was less than 310 MPa, and a ceramic sintered body having poor bending strength was obtained.

As shown in sample No. 13, when Mn was contained in an amount of less than 3.0 mass% in terms of $MnO_2$, a ceramic sintered body having b* of more than 2.0 was obtained. As shown in sample No. 17, when Mn was contained in an amount of more than 3.7 mass% in terms of $MnO_2$, the three-point bending strength was less than 310 MPa, and a ceramic sintered body having poor bending strength was obtained.

As shown in sample No. 18, when Fe was contained in an amount of less than 1.1 mass% in terms of $Fe_2O_3$, $\Delta E$ was more than 36. A ceramic sintered body in which L* was more than 36 was obtained. As shown in sample No. 21, when Fe was contained in an amount of more than 1.7 mass% in terms of $Fe_2O_3$, a ceramic sintered body in which a* and b* were more than 2.0 was obtained.

On the other hand, as shown in sample Nos. 2, 3, 6, 7, 10, 11, 14 to 16, and 19, a ceramic sintered body containing 90 mass% or more of Al in terms of $Al_2O_3$, 0.4 mass% or more and 2.5 mass% or less of Si in terms of $SiO_2$, 3.0 mass% or more and 3.7 mass% or less of Mn in terms of $MnO_2$, 1.1 mass% or more and 1.7 mass% or less of Ti in terms of $TiO_2$, 1.1 mass% or more and 1.7 mass% or less of Fe in terms of $Fe_2O_3$, and 0.05 mass% or more and 0.3 mass% or less of Mg in terms of MgO had a volume resistivity of $10^9$ $\Omega \cdot m$ or more and a three-point bending strength of 310 MPa or more. As described above, the ceramic sintered body of the present disclosure has relatively high insulation resistance and physical strength. In the ceramic sintered body of the present disclosure, $\Delta E$ was 36 or less. a* and b* were 0 or more and 2.0 or less, L* was 0 or more and 36 or less, and a black color was exhibited.

When the content of $MnO_2$ was 2 or more times the content of $Fe_2O_3$ ($(MnO_2/Fe_2O_3) \geq 2$), a ceramic sintered body having low a* and b* was obtained.

A molded body having the same composition as that of sample No. 15 in Table 1 was fired at a temperature lower than that of sample No. 15 by 50°C to prepare a ceramic sintered body. Properties of the sintered body are shown in Table 2.

[Table 2]

(Table 2)

| Sample No. | Three-point bending strength (MPa) | Volume resistivity ($\times 10^9$ $\Omega \cdot m$) | a* | b* | L* | $\Delta E$ |
|---|---|---|---|---|---|---|
| 22 | 330 | 2.3 | 0.8 | -1.0 | 35 | 35 |
| 23 | 330 | 2.3 | 4.9 | 6.7 | 19 | 21 |

Values of a*, b*, L*, and $\Delta E$ of sample No. 22 in Table 2 were measured on the fired surface in the same manner as in Table 1. Values of a*, b*, L*, and $\Delta E$ of sample No. 23 in Table 2 were measured on a mirror-finished surface, that is, a mirror surface. In the ceramic sintered body of the present disclosure, when mirror finishing was performed, L* and $\Delta E$ tended to be smaller than those of the fired surface. On the other hand, in the ceramic sintered body of the present disclosure, when mirror finishing was performed, a* and b* tended to be larger than those of the fired surface. The strength of the ceramic sintered body of the present disclosure was less affected by the firing temperature. From the viewpoint of reflectance, the ceramic sintered body of the present disclosure showed a reflectance of 15% or less. The ceramic sintered body of the present disclosure showed a reflectance of 12% or less on the mirror surface. In the ceramic sintered body of the present disclosure, when the fired surface and the mirror surface were compared, the mirror surface tended to have a lower reflectance.

While the present disclosure has been described in detail, the present disclosure is not limited to the aforementioned embodiments, and various changes, improvements, and the like can be made without departing from the gist of the present disclosure.

Further effects and variations can be readily derived by those skilled in the art. Thus, the broader aspects of the present invention are not limited to the specific details and representative embodiments represented and described above.

Accordingly, various changes are possible without departing from the spirit or scope of the general inventive concepts defined by the appended claims and their equivalents. For example, the ceramic sintered body of the present disclosure exhibits a black color and thus can be used as a member for an exposure treatment device, a light shielding material, a heat absorbing material, and the like. The ceramic sintered body of the present disclosure has an excellent mechanical characteristic and an excellent electrical characteristic, and thus can also be used as a mounting substrate, or a structural component or a functional component of an industrial machinery and equipment. The ceramic sintered body of the present disclosure exhibits a black color and has an excellent mechanical characteristic and thus may be used as a sliding member or a decorative member of a thread path component, fishing gear, and the like.

**Claims**

1. A ceramic sintered body comprising:

   90 mass% or more of Al in terms of $Al_2O_3$;
   0.4 mass% or more and 2.5 mass% or less of Si in terms of $SiO_2$;
   3.0 mass% or more and 3.7 mass% or less of Mn in terms of $MnO_2$;
   1.1 mass% or more and 1.7 mass% or less of Ti in terms of $TiO_2$;
   1.1 mass% or more and 1.7 mass% or less of Fe in terms of $Fe_2O_3$; and
   0.05 mass% or more and 0.3 mass% or less of Mg in terms of MgO,
   wherein $\Delta E$ calculated based on a*, b*, and L* is 0 or more and 36 or less.

2. The ceramic sintered body according to claim 1, wherein the a* and the b* are -2.0 or more and 2.0 or less, and the L* is 0 or more and 36 or less.

3. The ceramic sintered body according to claim 1 or 2, wherein a content of the Mn in terms of $MnO_2$ is 2 or more times and 5 or less times a content of the Fe in terms of $Fe_2O_3$.

4. The ceramic sintered body according to any one of claims 1 to 3, wherein a volume resistivity is $10^9$ $\Omega \cdot$m or more, and a three-point bending strength is 310 MPa or more.

5. The ceramic sintered body according to any one of claims 1 to 4, wherein the a* and the b* are 1.5 or less.

## INTERNATIONAL SEARCH REPORT

| | International application No. |
|---|---|
| | **PCT/JP2023/042786** |

| **A.** | **CLASSIFICATION OF SUBJECT MATTER** |
|---|---|

*C04B 35/117*(2006.01)i
FI:   C04B35/117

According to International Patent Classification (IPC) or to both national classification and IPC

| **B.** | **FIELDS SEARCHED** |
|---|---|

Minimum documentation searched (classification system followed by classification symbols)

C04B35/10-35/119

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JSTChina/JST7580 (JDreamIII)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | WO 2017/090717 A1 (KYOCERA CORPORATION) 01 June 2017 (2017-06-01) entire text | 1-5 |
| A | JP 2004-99413 A (SODICK CO LTD) 02 April 2004 (2004-04-02) entire text | 1-5 |
| A | JP 2016-176988 A (KYOCERA CORPORATION) 06 October 2016 (2016-10-06) entire text | 1-5 |
| A | WO 2020/032037 A1 (KYOCERA CORPORATION) 13 February 2020 (2020-02-13) entire text | 1-5 |
| A | JP 4-325456 A (HOECHST CERAM TEC AG) 13 November 1992 (1992-11-13) entire text | 1-5 |
| A | JP 64-42359 A (SUMITOMO KINZOKU CERAMICS KK) 14 February 1989 (1989-02-14) entire text | 1-5 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 January 2024** | **06 February 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 **Japan** | |
| | Telephone No. |

Form PCT/ISA/210 (second sheet) (July 2022)

**INTERNATIONAL SEARCH REPORT**

| International application No. |
| --- |
| **PCT/JP2023/042786** |

**C.     DOCUMENTS CONSIDERED TO BE RELEVANT**

| Category* | Citation of document, with indication, where appropriate, of the relevant passages | Relevant to claim No. |
| --- | --- | --- |
| A | JP 60-103090 A (KYOCERA CORPORATION) 07 June 1985 (1985-06-07) entire text | 1-5 |
| A | JP 49-80113 A (HITACHI LTD) 02 August 1974 (1974-08-02) entire text | 1-5 |
| A | JP 2009-132591 A (KYOCERA CORPORATION) 18 June 2009 (2009-06-18) entire text | 1-5 |

Form PCT/ISA/210 (second sheet) (July 2022)

EP 4 628 469 A1

## INTERNATIONAL SEARCH REPORT
### Information on patent family members

International application No.

**PCT/JP2023/042786**

| Patent document cited in search report | | | Publication date (day/month/year) | Patent family member(s) | | | Publication date (day/month/year) |
|---|---|---|---|---|---|---|---|
| WO | 2017/090717 | A1 | 01 June 2017 | US<br>entire text<br>EP<br>CN | 2018/0343841<br><br>3366128<br>108289440 | A1<br><br>A1<br>A | |
| JP | 2004-99413 | A | 02 April 2004 | US<br>entire text<br>WO<br>EP<br>CN<br>KR<br>TW | 2004/0266606<br><br>2004/024649<br>1538132<br>1622924<br>10-2005-0052489<br>200413270 | A1<br><br>A1<br>A1<br>A<br>A<br>A | |
| JP | 2016-176988 | A | 06 October 2016 | (Family: none) | | | |
| WO | 2020/032037 | A1 | 13 February 2020 | (Family: none) | | | |
| JP | 4-325456 | A | 13 November 1992 | EP | 497241 | A1 | |
| JP | 64-42359 | A | 14 February 1989 | (Family: none) | | | |
| JP | 60-103090 | A | 07 June 1985 | US<br>entire text | 4595665 | A | |
| JP | 49-80113 | A | 02 August 1974 | (Family: none) | | | |
| JP | 2009-132591 | A | 18 June 2009 | US<br>entire text<br>WO<br>CN | 2010/0234207<br><br>2009/057603<br>101842332 | A1<br><br>A1<br>A | |

Form PCT/ISA/210 (patent family annex) (July 2022)

**EP 4 628 469 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0142359 A